# EUROPÄISCHE PATENTSCHRIFT

(11) **EP 2 262 215 B1**
(45) Veröffentlichungstag und Bekanntmachung des Hinweises auf die Patenterteilung: **21.02.2018**
(21) Anmeldenummer: 10181762.5
(22) Anmeldetag: 11.12.2006
(51) Int. Cl.: H04M 7/12, H04L 29/12, H04L 29/06, H04L 12/46

(54) **System mit Gateway zur Kopplung von Kommunikationsnetzwerken**
System with gateway as interface for communications networks
Système avec passerelle destinée au couplage de réseaux de communication

(30) Priorität: 19.12.2005 DE 102005061047
(43) Veröffentlichungstag der Anmeldung: 15.12.2010
(62) Teilanmeldung aus: 06125788.7
(73) Patentinhaber: Vodafone Holding GmbH, 40213 Düsseldorf (DE)
(72) Erfinder: Rosenberger, Frank, 40668 Meerbusch (DE); Hertle, Jochen, 85521 Ottobrunn (DE)
(74) Vertreter: Weisbrodt, Bernd

(56) Entgegenhaltungen:
- EP-A- 1 558 006
- EP-A2- 1 035 716
- US-B1- 6 198 738

## Beschreibung

### Technisches Gebiet

Die Erfindung betrifft ein System zur Kommunikation über Kommunikationsnetzwerke mit einer Kommunikationseinheit, enthaltend
a) wenigstens eine Zentraleinheit, über welche Kommunikationseinheiten eines ersten Kommunikationsnetzwerkes miteinander kommunizieren,
b) eine weitere Zentraleinheit, über welche Kommunikationseinheiten eines zweiten Kommunikationsnetzwerkes miteinander kommunizieren
c) ein rechnergesteuertes Gateway zur Kopplung der Zentraleinheiten der Kommunikationsnetzwerke miteinander zum Kommunikationsaustausch zwischen den Kommunikationsnetzwerken.

### Stand der Technik

Nach bekannten Verfahren zum Rufaufbau wird eine ISDN Nummer verwendet. Die ISDN-Nummer wird zum Verbindungsaufbau zwischen Teilnehmern entsprechend interpretiert. Mittlerweile setzt sich immer mehr auch die VoIP-Kommunikation im Internet durch.

Unter VoIP-Kommunikation wird eine Telefon-Kommunikation verstanden, welche eine IP-Adressierung verwendet, wie sie im Internet üblich ist. Dadurch lässt sich auch über das Internet telefonieren. "IP" ist die Abkürzung für "Internet Protocol." Dabei handelt es sich um ein Protokoll der TCP/IP-Familie zur Übertragung von Daten.

Zwischen herkömmlicher ISDN-Kommunikation und IP-Kommunikation bestehen grundsätzliche technische Netzwerkunterschiede. Daher ist es erforderlich immer spezielle Einwahlknoten anzuwählen, die eine Verbindung zwischen den Teilnehmern unterschiedlicher Netzwerkstruktur herstellen. Dazu erhält der VoIP-Nutzer sowohl eine ISDN-Nummer, über die er über herkömmliche Kommunikationsnetze erreichbar ist, als auch eine IP-Adresse. Dies ist verwaltungstechnisch aufwendig und für die Teilnehmer sehr umständlich.

In der EP 1 558 006 A2 wird ein Adressverzeichnisdienst für einen Teilnehmer eines Kommunikationssystems beschrieben. Das Kommunikationssystem umfasst verschiedene Kommunikationsnetzwerke, wie beispielsweise Telefonnetzwerke oder Datennetzwerke. Über diese Netzwerke kann der Teilnehmer den Adressverzeichnisdienst über unterschiedliche Kommunikationsarten, wie Instant Messaging (Nachrichtensofortversand), E-Mail oder Web-Portal in Anspruch nehmen. Dazu hat der Adressverzeichnisdienst Zugriff sowohl auf eine firmeninternen, dem Teilnehmer zugeordnete Datenbank als auch auf externe Datenbanken anderer Firmen, generelle Telefonnummerndatendanken, ENUM- (Elektronic Number) Datendanken zum Konvertieren von Telefonnummern nach dem E.164-Standard in URI's (Universal Resource Identifieres) für das Internet und DNS- (Domain Name System) Datenbanken für Adressen im Internet.

### Offenbarung der Erfindung

Aufgabe der Erfindung ist es daher, die bekannten Techniken in der Anwendung für den Teilnehmer zu vereinfachen, wobei nicht zwei Adressierungsarten erforderlich sind.

Erfindungsgemäß wird die Aufgabe gelöst durch ein System gemäß Anspruch 1. Die Erfindung beruht grundsätzlich auf dem Prinzip, bei der Kommunikation zwischen zwei unterschiedlichen Kommunikationsnetzwerken mittels Gateway einmal angewählte Rufnummern in das jeweilige Anwahlverfahren des anderen Kommunikationsnetzwerkes zu konvertieren. Gegenüber herkömmlichen Verbindungsarten braucht ein Teilnehmer somit für jedes Kommunikationsnetzwerk nur noch eine einzige Adressierung, über die er von anderen Kommunikationsnetzwerken aus erreicht werden kann. Die entsprechende Interpretation der Adressierung erfolgt dabei durch das Gateway.

Heutzutage spielen Mobilfunknetze eine immer wichtigere Rolle bei Kommunikationsnetzwerken. Ein Aspekt des erfindungsgemäßen Systems liegt somit darin, dass nunmehr eines der Kommunikationsnetzwerke als Mobilfunknetz ausgebildet ist, wobei dessen Kommunikationseinheiten als Mobilfunkendgeräte ausgebildet sind. Aus dem gleichen Grunde ist es besonders vorteilhaft, wenn eines der Kommunikationsnetzwerke als Festnetz ausgebildet ist, wobei dessen Kommunikationseinheiten als Festnetzgeräte ausgebildet sind.

Als vorteilhafte Ausgestaltung der Erfindung erweist sich ferner, wenn in einem der Kommunikationsnetzwerke eine IP-Adressierung zur Kommunikationsaufnahme von Kommunikationseinheiten, insbesondere zur VoIP-Kommunikation, vorgesehen ist. Da das Internet auf der bekannten IP-Adressierung basiert, eignet sie sich besonders gut als Adressierungsangabe. Dadurch lässt sich die VoIP-Kommunikation in dieses System integrieren.

Das erfindungsgemäße System sieht vor, dass das Gateway eine Adressregister zur Auffindung von Adressen unterschiedlicher Kommunikationsnetzwerke aufweist. Durch dieses Adresseregister kann ein anrufender Kommunikationsteilnehmer den gewünschten Teilnehmer eines anderen Kommunikationsnetzwerkes in dem Register suchen und eine Verbindung zu diesem herstellen.

Durch alle diese Maßnahmen kann ein Kommunikationsteilnehmer auf einfache Weise einen Kommunikationsteilnehmer eines anderen Kommunikationsnetzwerkes auffinden und über das Gateway mit ihm Kontakt aufnehmen.

In dem Gateway ist ein Adressspeicher, in dem eine Auswahl von bevorzugten Adressen des Adressregisters eines Teilnehmers gespeichert ist, vorhanden. Mit einem solchen Adressspeicher kann ein Kommunikationsteilnehmer eine Adressenliste erstellen, und im Gateway abspeichern. Damit wird ihm das Auffinden von Adressen erheblich erleichtert.

Eine weitere bevorzugte Variante ergibt sich dadurch, dass das Gateway Mittel für einen direkten Zugriff einer Kommunikationseinheit auf Daten in dem Gateway, insbesondere auf die Adressen eines Adressregisters, aufweist. Durch den direkten Zugriff wird nicht nur die Geschwindigkeit für das Auffinden von Adressen beschleunigt, sondern auch der Verwaltungsaufwand für die Zentraleinheiten der jeweiligen Kommunikationsnetze erheblich reduziert.

Es besteht ferner die Möglichkeit, dass das Gateway eine Statusanzeige über Erreichbarkeit oder Nichterreichbarkeit der angewählten Kommunikationseinheit an die anwählende Kommunikationseinheit übermittelt. Auf diese Weise erhält ein Kommunikationsteilnehmer Hinweise darüber, ob er einen Kommunikationsteilnehmer überhaupt erreichen kann. Dies spart Netzkapazitäten, um nicht unnötige Verbindungsversuche vorzunehmen, die das Gateway und die Kommunikationsnetze belasten.

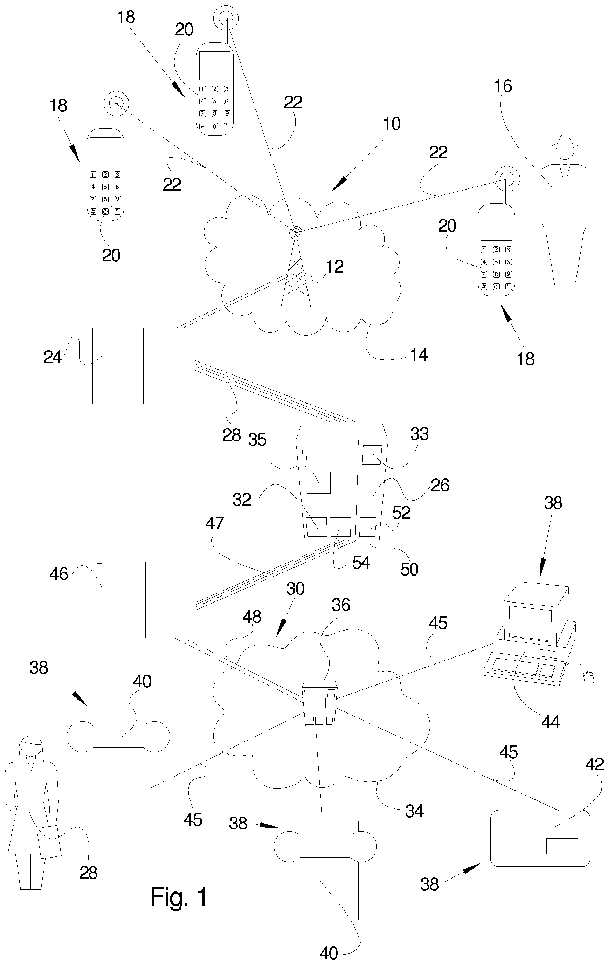

## Patentansprüche

1. System zur Kommunikation von Kommunikationseinheiten (18, 38) zwischen unterschiedlichen Kommunikationsnetzwerken (10, 30), umfassend
a) wenigstens eine Zentraleinheit (24), über welche Kommunikationseinheiten (18) eines ersten Kommunikationsnetzwerkes (10) miteinander kommunizieren,
b) eine weitere Zentraleinheit (46), über welche Kommunikationseinheiten (38) eines zweiten Kommunikationsnetzwerkes (30) miteinander kommunizieren,
c) ein rechnergesteuertes Gateway (26) zur Kopplung der Zentraleinheiten (24, 46) der Kommunikationsnetzwerke (10, 30) miteinander zum Kommunikationsaustausch zwischen den Kommunikationsnetzwerken (10, 30),
d) wobei das rechnergesteuerte Gateway (26)
- eine Speichereinheit (32) zum Zwischenspeichern einer von einem Kommunikationsteilnehmer (16) angewählten Adresse einer Kommunikationseinheit (18), welche einem anderen Kommunikationsteilnehmer (28) zugeordnet ist,
- eine Konvertierungseinheit (33), welche die in der Speichereinheit (32) abgelegte Adresse des angewählten Kommunikationsteilnehmers (28) an das jeweilige Kommunikationsnetzwerk (30) des angewählten Kommunikationsteilnehmers (28) anpasst,
- eine Übermittlungseinheit (35), welche der Zentraleinheit (46) des jeweiligen Kommunikationsnetzes (30), welches dem angewählten Kommunikationsteilnehmer (28) zugeordnet ist, die konvertierte Adresse für einen Verbindungsaufbau übermittelt,
- einen Registerspeicher (50), in welchem ein Adressregister (52) zum Auffinden von unterschiedlichen Kommunikationsnetzen (10, 30) zugehörigen Adressen vorgesehen ist,
umfasst
und wobei das System **dadurch gekennzeichnet ist, dass** das Gateway
- einen als Adressspeicher ausgebildeten speziellen Speicher (54), in welchem durch einen Kommunikationsteilnehmer (16, 26) aus dem Adressregister (52) ausgewählte Adressen persönlicher Kontakte dieses Kommunikationsteilnehmers (16, 26) ablegbar sind,
umfasst.

2. System nach Anspruch 1, **dadurch gekennzeichnet, dass** eines der Kommunikationsnetzwerke (10, 30) als Mobilfunknetz (14) ausgebildet ist, wobei dessen Kommunikationseinheiten (18) als Mobilfunkendgeräte (20) ausgebildet sind.

3. System nach einem der Ansprüche 1 oder 2, **dadurch gekennzeichnet, dass** eines der Kommunikationsnetzwerke als Festnetz ausgebildet ist, wobei dessen Kommunikationseinheiten als Festnetzgeräte ausgebildet sind.

4. System nach einem der Ansprüche 1 bis 3, **dadurch gekennzeichnet, dass** das in einem Kommunikationsnetzwerke (30) eine IP-Adressierung zur Kommunikationsaufnahme von Kommunikationseinheiten (38), insbesondere zur VoIP-Kommunikation, vorgesehen ist.

## Claims

1. A system for the communication of communication units (18, 38) between different communication networks (10, 30), comprising
a) at least one central unit (24), via which communication units (18) of a first communication network (10) communicate with each other,
b) another central unit (46), via which communication units (38) of a second communication network (30) communicate with each other,
c) a computer-controlled gateway (26) for coupling the central units (24, 46) of the communication networks (10, 30) to each other for the communication exchange between the communication networks (10, 30),
d) wherein the computer-controlled gateway (26) comprises
- a storage unit (32) for storing an address of a communication unit (18) temporarily, which address has been called by a communication partner (16) and which communication unit (18) is assigned to another communication partner (28),
- a conversion unit (33) which adapts the address of the called communication partner (28), which address has been stored in the storage unit (32), to the respective communication network (30) of the called communication partner (28),
- a transmission unit (35) which transmits the converted address to the central unit (46) of the respective communication network (30) which is assigned to the called communication partner (28) for establishing a connection,
- a register memory (50) in which an address register (52) for finding addresses that belong to different communication networks (10, 30) is provided,
and wherein the system is **characterized in that** the gateway comprises
- a special storage (54) which is configured as an address storage, in which addresses that have been selected from the address register (52) by a communication partner (16, 26) and which belong to personal contacts of this communication partner (16, 26) can be stored.

2. A system according to claim 1, **characterized in that** one of the communication networks (10, 30) is configured as a mobile radio network, wherein the communication units thereof are configured as mobile terminals (20).

3. A system according to one of the claims 1 or 2, **characterized in that** one of the communication networks is configured as a land-line network, wherein the communication units thereof are configured as land-line terminals.

4. A system according to one of the claims 1 to 3, **characterized in that** an IP addressing for starting a communication between communication units (38), in particular a VoIP communication, is provided in one of the communication networks (30).

## Revendications

1. Système destiné à la communication d'unités de communication (18, 38) entre des réseaux de communication différents (10, 30), comprenant :
a) au moins une unité centrale (24), par laquelle des unités de communication (18) d'un premier réseau de communication (10) peuvent communiquer l'une à l'autre,
b) une autre unité centrale (46), par laquelle des unités de communication (38) d'un deuxième réseau de communication (30) peuvent communiquer l'une à l'autre,
c) une passerelle (26) commandée par ordinateur pour coupler les unités centrales (24, 46) des réseaux de communication (10, 30) l'une à l'autre pour l'échange de communication entre les réseaux de communication (10, 30),
d) la passerelle commandée par ordinateur (26) comprenant
- une unité de stockage (32) pour stocker temporairement une adresse, qui a été appelée par un participant à la communication (16), d'une unité de communication (18), qui est attribuée à un autre participant à la communication (28),
- une unité de conversion (33), qui adapte l'adresse stockée dans l'unité de stockage et appartenant au participant à la communication appelé (28) au réseau de communication respectif (30) du participant à la communication appelé (28),
- une unité de transmission (35), qui transmet l'adresse convertie à l'unité centrale (46) du réseau de communication respectif (30), qui est attribué au participant à la communication (28) appelé, pour établir une connexion,
- un banc de registres (50), dans lequel un registre d'adresses (52) est prévu pour trouver des adresses appartenant à des réseaux de communication différents (10, 30),
et le système est **caractérisé en ce que** la passerelle comprend
- une mémoire spécifique (54), qui est configurée comme une mémoire d'adresses, dans laquelle des adresses sélectionnées dans le banc de registres par un participant à la communication (16, 26) et appartenant aux contacts personnels de ce partenaire à la communication (16, 26) peuvent être stockées.

2. Système selon la revendication 1, **caractérisé en ce que** l'un des réseaux de communication (10, 30) est configuré comme un réseau radio mobile (14), les unités de communication (18) de celui-ci étant configurées comme des terminaux mobiles (20).

3. Système selon l'une des revendications 1 ou 2, **caractérisé en ce que** l'un des réseaux de communication (10, 30) est configuré comme un réseau téléphone fixe, les unités de communication de celui-ci étant configurées comme des terminaux de réseau fixe.

4. Système selon l'une des revendications 1 à 3, **caractérisé en ce qu'**un adressage IP est prévu dans un des réseaux de communication (30) pour établir une communication d'unités de communication (38), notamment une communication VoIP.
